# FASCICULE DE BREVET EUROPEEN

(11) **EP 2 943 663 B1**
(45) Date de publication et mention de la délivrance du brevet: **14.12.2016**
(21) Numéro de dépôt: 13827014.5
(22) Date de dépôt: 19.12.2013
(51) Int. Cl.: F01N 3/08, F01N 3/20, F01N 9/00

(54) **PROCEDE DE CONTROLE DE LA DEPOLLUTION EN OXYDES D'AZOTE DANS UN VEHICULE AUTOMOBILE**
VERFAHREN ZUR ÜBERWACHUNG DER STICKOXID-DEKONTAMINATION IN EINEM KRAFTFAHRZEUG
METHOD FOR MONITORING THE NITROGEN OXIDE DECONTAMINATION IN A MOTOR VEHICLE

(30) Priorité: 14.01.2013 FR 1350285
(43) Date de publication de la demande: 18.11.2015
(73) Titulaire: Peugeot Citroën Automobiles SA, 78140 Vélizy Villacoublay (FR)
(72) Inventeur: CREHAN, Gabriel, F-92420 Vaucresson (FR)
(74) Mandataire: Renous Chan, Véronique
(86) Numéro de dépôt international: PCT/FR2013/053179
(87) Numéro de publication internationale: WO 2014/108619

(56) Documents cités:
- DE-A1-102010 049 988
- FR-A1- 2 961 558
- GB-A- 2 467 164
- US-A1- 2006 010 857
- US-A1- 2009 260 349

## Description

L'invention porte sur un procédé de contrôle de la dépollution en oxydes d'azote dans une ligne d'échappement d'un véhicule automobile, le système de dépollution en oxydes d'azote comprenant un système SCR. En particulier, l'invention porte sur la possibilité de permutation du mode de dépollution SCR en oxydes d'azote en un autre mode, cet autre mode étant le mode LNT et utilisant un piège à oxydes d'azote ou piège NOx. Ceci peut avoir lieu quand le réservoir SCR est vide ou à un niveau critique pour assurer une dépollution satisfaisante dans les kilomètres à venir.

Le domaine technique de la présente invention est particulièrement la dépollution essence ou Diesel d'un véhicule présentant un moteur thermique. Plus particulièrement mais non limitativement, la présente invention est applicable à des moteurs Diesel avec un système de dépollution concernant notamment les oxydes d'azote et comportant en outre au moins un filtre à particules.

Il existe deux principaux systèmes de dépollution des oxydes d'azote. Le premier système est appelé système SCR pour Réduction Catalytique Sélective. Le procédé de réduction fonctionne par injection dans la ligne d'échappement d'un agent de dépollution dit réducteur SCR, cet agent étant avantageusement mais non limitativement de l'urée ou un dérivé de l'urée.

Le second système de dépollution des oxydes d'azote utilise un piège à NOx, aussi appelé système LNT pour l'abréviation de l'appellation anglaise de Lean NOx Trap (piège à NOx mode pauvre, en français). Ce piège permet la rétention des oxydes d'azote dans des conditions de fonctionnement du moteur non favorables de dépollution, ce piège à NOx pouvant libérer et détruire les oxydes d'azote piégés dans d'autres conditions plus favorables à leur destruction. Le mode de dépollution en oxydes d'azote correspondant est appelé mode LNT.

Un système LNT ou piège à NOx retient les oxydes d'azote par réaction chimique. Une fois que le piège est rempli d'oxydes d'azote ayant réagi, il peut être procédé par une stratégie d'injection d'un surplus de carburant à l'envoi d'un excès d'hydrocarbures ou HC à travers la ligne d'échappement, ces hydrocarbures réagissant avec les oxydes d'azote alors libérés et les neutralisant.

Les deux modes de dépollution en oxydes d'azote précédemment mentionnés présentent des avantages et des désavantages spécifiques.

L'avantage majeur d'un piège à NOx dans le mode LNT est de ne pas nécessiter la présence d'un réservoir d'agent réducteur, d'une ligne d'agent réducteur chauffée, d'un injecteur d'agent réducteur etc. Le matériau de piégeage des oxydes d'azote peut être intégré dans un catalyseur d'oxydation Diesel ou DOC, un tel catalyseur étant principalement utilisé pour la dépollution en monoxyde de carbone ou CO ou en hydrocarbures ou HC. Un piège à NOx présente donc un faible encombrement et une masse réduite ainsi qu'un moindre coût.

Un autre avantage majeur d'un piège à NOx est que le fonctionnement de la dépollution n'est pas affecté par un manque d'agent de dépollution dans un quelconque réservoir. Ce n'est pas le cas pour un système SCR et le piège à NOx est de ce point de vue très avantageux par rapport à un système SCR pour un conducteur qui n'a pas à se soucier du remplissage d'un réservoir d'agent de dépollution pour le fonctionnement du piège.

Comme désavantage majeur, un piège à NOx implique une plus grande consommation de carburant. Ceci augmente aussi les émissions de CO2.

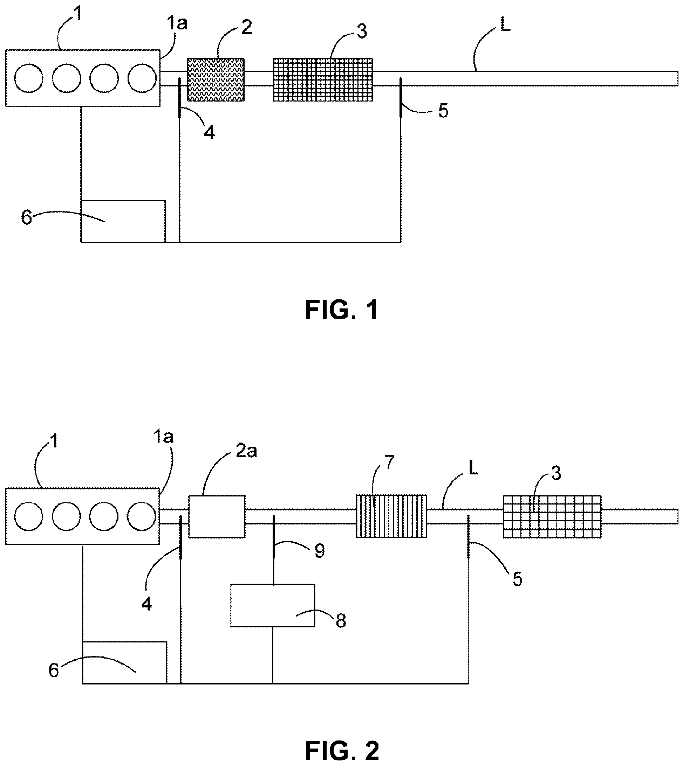

En ce qui concerne un système SCR, celui-ci injecte un agent SCR dans la ligne d'échappement, cet agent neutralisant les oxydes d'azote comme il sera vu en regard de la figure 2 qui sera détaillée ultérieurement. En association avec un système SCR, il peut être utilisé un adsorbeur passif de NOx ou oxydes d'azote aussi connu sous l'abréviation PNA, ce qui permet d'augmenter l'efficacité d'élimination des oxydes d'azote par adsorption des oxydes d'azote à température basse et désorption des oxydes une fois que le catalyseur SCR est actif. Les compositions d'un PNA et d'un piège à NOx sont sensiblement équivalentes.

Le principal avantage d'un système SCR est de ne pas dépendre d'un ajout de carburant, étant donné que l'agent d'élimination des oxydes d'azote n'est pas un excès de carburant en provenance du moteur mais un agent SCR ajouté dans la ligne d'échappement, par exemple de l'urée ou un dérivé de l'urée. Ainsi la consommation optimale de carburant permise par le conducteur est conservée, ce qui permet de maintenir les émissions de CO2 à un niveau optimal et de ne pas augmenter la dépense énergétique du véhicule.

Le désavantage d'un système SCR est qu'un agent SCR doit être stocké dans un réservoir à proximité de la ligne d'échappement. Un tel réservoir est coûteux, présente un poids de plusieurs kilogrammes et est encombrant. Ceci est particulièrement désavantageux pour des petits véhicules. Un autre désavantage concerne l'obligation de remplir régulièrement le réservoir d'agent SCR. Si ce réservoir est vide, le véhicule automobile peut être interdit de marche pour défaut de dépollution. Ceci est un problème sérieux pour le conducteur et l'oblige à remplir le réservoir SCR tous les 10.000 ou 15.000 kms.

Pour éviter une telle immobilisation du véhicule avec un réservoir SCR vide, il a été proposé d'avoir la possibilité de passer d'un mode SCR en un mode LNT. Ceci se passe fréquemment sans avertir le conducteur de la permutation du mode de dépollution et sans lui laisser le choix d'utiliser soit un mode SCR ou soit un mode LNT.

Dans ce cas il n'y a pas d'obligation de remplir le réservoir SCR même lors d'une visite de contrôle. Cependant ceci peut être perçu par le conducteur comme un facteur de réduction du coût de maintenance de son véhicule. Ceci est inexact du fait de la plus grande consommation de carburant pour le bon fonctionnement d'un piège à NOx, comme précédemment évoqué.

Le brevet US-B2-8 158 067 propose une ligne d'échappement avec un piège à NOx, un système SCR pour la dépollution en hydrocarbures et un filtre à particules. Le système SCR est donc principalement dédié à la dépollution en hydrocarbures et non à la dépollution en oxydes d'azote en n'éliminant les oxydes d'azote que lors de la régénération du filtre à particules. Ce traitement des oxydes d'azote n'est donc pas aussi efficace qu'un traitement par un système SCR spécifiquement dédié à la dépollution en oxydes d'azote.

Le document US2006/0010857A1 propose également un système automatique de gestion de la dépollution des NOx en fonction de divers paramètres du moteur et du véhicule.

Le problème à la base de la présente invention est, pour une ligne d'échappement dans un véhicule automobile comprenant un système de dépollution en oxydes d'azote présentant un système SCR et un piège à NOx, de gérer la permutation d'un mode SCR en un mode LNT selon la volonté du conducteur, le conducteur ayant pris connaissance de la situation du système de dépollution en oxydes d'azote et notamment du mode de dépollution en cours.

Pour atteindre cet objectif, il est prévu selon l'invention un procédé de contrôle de la dépollution en oxydes d'azote dans une ligne d'échappement d'un véhicule automobile, dans lequel il est prévu une possibilité de permutation d'un mode SCR, avec injection d'un agent SCR à partir d'un réservoir de dépollution, en un mode LNT, utilisant un piège à oxydes d'azote ou piège NOx quand le réservoir SCR est vide ou contient une quantité d'agent SCR prédéterminée minimale jugée critique pour assurer la dépollution, un retour au mode SCR étant prévu dès que le réservoir SCR a été de nouveau rempli, caractérisé en ce qu'au moins une alerte urgente est envoyée au conducteur quand le réservoir SCR est vide ou ne contient plus que ladite quantité minimale pour lui permettre de choisir s'il veut rouler en utilisant le mode LNT ou effectuer un remplissage du réservoir SCR.

L'effet technique est, d'une part, d'éviter que le véhicule doive être immobilisé pour dépollution SCR défaillante ou risquant de devenir prochainement défaillante faute d'agent SCR dans le réservoir SCR et, d'autre part, de laisser le choix au conducteur soit de rouler en mode LNT avec une consommation de carburant plus élevée qu'en mode SCR ou soit de remplir immédiatement à nouveau le réservoir SCR pour que le véhicule puisse repartir en mode de dépollution SCR, étant donné que, lorsque le réservoir est vide ou que la quantité restante minimale dans le réservoir a été atteinte, une alerte est envoyée au conducteur pour lui permettre de choisir entre les deux modes.

Une telle permutation permet au véhicule de ne pas être immobilisé jusqu'à un nouveau remplissage du réservoir SCR, ceci en roulant avec un mode de dépollution LNT, ce mode impliquant toutefois une augmentation de la consommation de carburant due au mode LNT. Il est prévu un retour au mode SCR dès que le réservoir SCR est de nouveau rempli pour maintenir la consommation de carburant à une valeur de consommation optimisée.

Avantageusement, il est envoyé au moins une autre alerte d'un différent niveau d'urgence que ladite au moins une alerte urgente.

Avantageusement, il est prévu au moins quatre niveaux d'urgence, comprenant une urgence nulle quand la quantité restante dans le réservoir SCR est au-dessus de la quantité minimale, une urgence moyenne quand la quantité restante dans le réservoir SCR baisse vers la quantité minimale, une urgence forte quand le réservoir SCR est vide ou que la quantité restante est en dessous de la quantité minimale et une urgence redevenue nulle quand le réservoir SCR a été de nouveau rempli.

Avantageusement, ladite au moins une alerte urgente et, le cas échéant, ladite au moins une autre alerte incorporent une indication au conducteur que le mode LNT implique une augmentation de la consommation en carburant par rapport au mode SCR.

Avantageusement, ladite au moins une alerte urgente et, le cas échéant, ladite au moins une autre alerte sont constituées d'un signal sonore, d'un signal visuel ou des deux simultanés, l'alerte ou les alertes pouvant être répétées.

Avantageusement, la quantité d'agent SCR dans le réservoir SCR est mesurée directement ou estimée.

L'invention concerne aussi une ligne d'échappement d'un véhicule automobile, s'étendant d'un collecteur d'échappement du moteur thermique présentant un système de dépollution en oxydes d'azote contrôlé conformément à un tel procédé, ce système de dépollution comportant un système SCR présentant un catalyseur SCR et un réservoir SCR injectant par un injecteur un agent SCR dans la ligne d'échappement, le système de dépollution comprenant un piège à oxydes d'azote ou piège à NOx et une unité de contrôle de la dépollution en oxydes d'azote, caractérisée en ce que l'unité de contrôle est connectée à l'habitacle du véhicule et présente des moyens de détermination de la quantité d'agent SCR dans le réservoir et des moyens d'émission d'au moins une alerte urgente au conducteur.

Avantageusement, la ligne d'échappement comporte un catalyseur d'oxydation intégrant le piège à NOx en son intérieur.

Avantageusement, le catalyseur d'oxydation présente une phase active d'échange avec les gaz d'échappement circulant à travers la ligne, cette phase active étant imprégnée par des dépôts d'au moins un élément chimique formant le piège à NOx réagissant avec les oxydes d'azote en donnant un composé chimiquement stable sauf pour des conditions de richesse supérieure à 1 en carburant dans la ligne d'échappement, les oxydes d'azote étant alors libérés et réduits par un réducteur pour former de l'azote.

Avantageusement, il est prévu au moins une sonde à oxydes d'azote, les valeurs relevées par ladite au moins une sonde étant envoyées à l'unité de contrôle de la dépollution en oxydes d'azote.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue longitudinale d'une ligne d'échappement, cette ligne présentant un piège à NOx ainsi qu'un système SCR intégré dans un filtre à particules, cette ligne pouvant servir à la mise en oeuvre du procédé selon la présente invention,
- la figure 2 est une représentation schématique d'une vue longitudinale d'une ligne d'échappement selon l'état de la technique, cette ligne présentant un système SCR et un piège à oxydes d'azote, cette ligne pouvant servir à la mise en oeuvre du procédé selon la présente invention.

La figure 1 montre un exemple de ligne L d'échappement munie d'éléments de dépollution avec son unité de contrôle 6 associée. Cette ligne L d'échappement présente une de ses extrémités partant du collecteur 1a d'échappement du moteur 1 thermique du véhicule. Dans cette ligne L d'échappement, il est prévu comme premier élément de dépollution en oxydes d'azote un piège à oxydes d'azote ou piège à NOx 2 suivi d'un filtre à particules 3 présent pour un moteur Diesel mais de plus en plus répandu pour les moteurs essence, ces particules étant généralement des particules de suie. Ce filtre à particules 3 présente un support filtrant pour la capture des particules contenues dans les gaz de la ligne L d'échappement.

Ce support filtrant du filtre à particules 3 est imprégné d'un agent de dépollution du type SCR, ce qui permet de regrouper en un seul élément de dépollution le filtre à particules et le système SCR. Avantageusement, il peut être prévu une sonde 4 à oxydes d'azote en amont du piège à NOx 2 de même qu'une sonde 5 à oxydes d'azote en aval du filtre à particules 3 imprégné d'agent SCR. Les relevés de ces sondes 4, 5 à oxydes d'azote sont envoyés à une unité de contrôle 6 comportant un microprocesseur pour le contrôle des émissions d'oxydes d'azote dans la ligne L d'échappement.

Ainsi, une telle ligne L d'échappement, pour la dépollution en oxydes d'azote, peut comporter simultanément un piège à NOx 2 et un système SCR, ce dernier étant intégré dans un filtre à particules 3. D'autres éléments de dépollution, par exemple pour les hydrocarbures et le monoxyde de carbone, non montrés à cette figure peuvent aussi être prévus dans la ligne L d'échappement. Ces éléments peuvent par exemple être du type catalyseur à trois voies ou catalyseur de réduction. Sur la ligne L d'échappement, il peut aussi être prévu d'autres moyens de mesure des émissions, par exemple une ou des sondes à oxygène.

La figure 2 montre une autre forme de réalisation d'une ligne L d'échappement comprenant notamment un système SCR 7, 8, 9 pour l'élimination des oxydes d'azote par réduction. A partir du collecteur 1a d'échappement de la ligne L d'échappement, donc d'amont en aval, il est prévu sur cette ligne L un catalyseur d'oxydation 2a avec une fonction de stockage des oxydes d'azote formant piège à NOx, puis un catalyseur SCR 7 et ensuite un filtre à particules 3.

Le catalyseur d'oxydation 2a présente une phase active d'échange avec les gaz d'échappement circulant à travers la ligne L, cette phase étant aussi appelée washcoat en anglais. Cette phase active est imprégnée par des dépôts d'au moins un élément chimique formant le piège à NOx. Cet élément chimique réagit avec les oxydes d'azote en donnant un composé chimiquement stable sauf pour des conditions de richesse supérieure à 1 en carburant dans la ligne L d'échappement, les oxydes d'azote étant alors libérés et réduits par un réducteur pour former de l'azote. Ceci implique donc une consommation de carburant un peu plus élevée pour le fonctionnement d'un piège à NOx, c'est-à-dire un mode de dépollution LNT que la consommation optimale de carburant.

La phase active d'échange du catalyseur d'oxydation 2a peut être composée de Al2O3, TiO2, ZrO2, CeO2,Y2O3 avec des éléments catalyseurs comme des métaux précieux tels que Pt, Pd, Rh, Ru, Re, Au, Ag, des métaux de transition tels que Sc, Ti, V, Cr, Mn, Fe, Co, Ni, Cu, Zn, des pièges à hydrocarbures comme des argiles ou des zéolithes, des métaux alcalins, des terres rares alcalines, des pérovskites dont le titanate de calcium CaTiO₃, etc.

Pour le stockage des oxydes d'azote, il peut être prévu des métaux d'absorption des nitrates tels que des métaux alcalins, des terres rares alcalines, des métaux de transition ou des oxydes d'un, de deux ou de plusieurs des éléments suivants : des zéolithes, des zéolithes dopés avec de préférence des oxydes de Al, Ce, Zr, Cu, Fe, Mn, W et Cu et leurs mélanges, des pérovskites, des argiles, du carbone et/ou leurs oxydes. De même, d'autres matériaux tels que des oxydes de lanthanide et d'actinide et leurs dérivés peuvent être utilisés.

Des métaux précieux peuvent aussi être utilisés pour accélérer le taux d'adsorption et de désorption des oxydes d'azote. Les métaux précieux et leurs dérivés comme Au, Ag, Ir, Ru, Rh, Pt, Pd peuvent servir de sites de réduction des oxydes d'azote en présence de réducteurs. Les zéolithes peuvent ne pas servir seulement de matériaux d'adsorption des oxydes d'azote mais peuvent servir aussi de pièges à hydrocarbures ou HC.

Tous ces exemples ne sont pas limitatifs. Une ou plusieurs phases actives d'échange peuvent être utilisées. Des matériaux servant au stockage des oxydes d'azote ou des métaux nobles du groupe du platine peuvent aussi être utilisés. Pour ordre d'idée, un catalyseur d'oxydation avec un piège à NOx peut comporter une structure monolithique en cordiérite de 1,6L avec approximativement 240 cellules par cm² et une épaisseur de paroi de 0,15 millimètres. Le ratio de chargement en métaux du groupe du platine entre le platine, le palladium et le rhodium peut être respectivement de 2, 1 et 1. Le matériau de stockage des oxydes d'azote peut être un oxyde de césium de formule CeOx avec d'autres oxydes comme ZrOx ou BaOx.

Le catalyseur SCR 7 est associé avec un réservoir d'agent réducteur 8, relié à la ligne L d'échappement par un injecteur 9 d'agent SCR débouchant dans la ligne L en amont du catalyseur SCR 7 et donc alimentant en agent SCR la ligne L avant le catalyseur SCR 7.

En ce qui concerne les éléments réducteurs employés pour la réduction des oxydes d'azote, la majeure partie des réducteurs peuvent être utilisés dans la ligne L d'échappement. Par exemple et sans être limitatif, il peut être utilisé du monoxyde de carbone, des hydrocarbures, des alcools de préférence des glycols ou des glycérols, des esters, des acides, de l'ammoniac et de l'hydroxyde d'ammonium, de l'urée de la guanidine ou sels de guanidine, ceci unitairement ou en combinaison. L'urée en phase aqueuse est le réducteur (ou précurseur de réducteur, car se décomposant en ammoniac) le plus couramment utilisé pour la réduction des NOx.

Ces éléments réducteurs peuvent être injectés par un injecteur 9 dans la ligne L d'échappement selon une stratégie d'injection préétablie.

A la figure 2, comme à la figure 1, il peut être avantageusement prévu une sonde 4 à oxydes d'azote en amont du catalyseur d'oxydation 2a de même qu'une sonde 5 à oxydes d'azote en aval du catalyseur SCR 7 et, de manière avantageuse, en amont du filtre à particules 3. Les relevés de ces sondes 4, 5 à oxydes d'azote sont envoyés au microprocesseur de l'unité de contrôle 6 des émissions, notamment des émissions d'oxydes d'azote, dans la ligne L d'échappement. D'autres éléments de dépollution non montrés à cette figure peuvent aussi être prévus dans la ligne L d'échappement, du type catalyseur à trois voies ou catalyseur de réduction ainsi que d'autres moyens de mesure des émissions, par exemple une ou des sondes à oxygène.

La présente invention présuppose la possibilité d'utiliser un système SCR et un piège à NOx simultanément. Le système de dépollution peut fonctionner en mode SCR ou en mode LNT avec uniquement le piège à NOx pour la dépollution en oxydes d'azote, ce mode LNT prenant place quand le réservoir SCR 8 d'agent SCR est vide.

Pour la mise en oeuvre du procédé, la configuration montrée à la figure 2 est préférée, avec un piège à NOx intégré dans un catalyseur d'oxydation 2a disposé en amont du catalyseur SCR 7, lui-même en amont du filtre à particules 3. De manière optionnelle, un catalyseur FBC ou Fuel Borne Catalyst en anglais peut être utilisé pour aider à une meilleure régénération des suies à des températures basses. Un tel catalyseur FBC peut être avantageusement utilisé pour des véhicules à petit moteur Diesel.

D'autres architectures de ligne d'échappement peuvent aussi être utilisées. Par exemple, le catalyseur SCR peut être placé après le filtre à particules. Il peut exister plusieurs pièges à NOx disposés en amont et en aval du catalyseur d'oxydation, bien qu'il soit avantageusement économique de n'avoir qu'un seul piège à NOx. La présente invention est par exemple aussi applicable à une ligne L d'échappement montrée à la figure 1, bien que la ligne L ne comporte pas à proprement parler de réservoir SCR. Il est cependant considéré que les dépôts d'agent SCR imprégnant le support filtrant du filtre à particules 3 forment une équivalence à un réservoir SCR et qu'on peut estimer une quantité restante d'agent SCR dans le filtre à particules 3 et la comparer à une quantité prédéterminée minimale jugée critique pour le bon fonctionnement du système SCR associé au filtre à particules 3.

Dans ce qui va suivre, il va être fait référence à l'architecture de ligne d'échappement montrée à la figure 2, ce qui est purement illustratif et non limitatif.

Dans un fonctionnement normal de dépollution de la ligne L d'échappement, c'est le système SCR 7, 8, 9 qui prévaut pour assurer la dépollution en oxydes d'azote, ceci à la condition que le réservoir 8 d'agent SCR soit suffisamment rempli : la dépollution en oxydes d'azote fonctionne alors en mode SCR. Quand le réservoir 8 d'agent SCR est insuffisamment rempli ou vide, la dépollution en oxydes d'azote est assurée par le piège à NOx se trouvant avantageusement intégré dans le catalyseur d'oxydation 2a: la dépollution en oxydes d'azote fonctionne alors en mode LNT.

La présente invention concerne un procédé de contrôle de la dépollution en oxydes d'azote dans une ligne L d'échappement d'un véhicule automobile. Pour cette ligne L d'échappement, il est prévu une possibilité de permutation d'un mode SCR avec injection d'un agent SCR à partir d'un réservoir SCR 8 de dépollution en un mode LNT utilisant un piège à oxydes d'azote ou piège NOx quand le réservoir SCR 8 est vide ou contenant une quantité prédéterminée minimale jugée critique pour assurer la dépollution, un retour au mode SCR étant prévu dès que le réservoir SCR 8 a été de nouveau rempli. Dans le procédé selon la présente invention, au moins une alerte urgente est envoyée au conducteur quand le réservoir SCR 8 est vide ou ne contient que la quantité prédéterminée minimale jugée critique pour lui permettre de choisir s'il veut rouler en utilisant le mode LNT ou effectuer un remplissage immédiat du réservoir SCR 8.

Dans le cas de la figure 2, la quantité d'agent SCR se trouvant dans le réservoir SCR 8 peut être estimée directement par une mesure de niveau ou indirectement par une estimation. La mesure du niveau peut, par exemple, être faite par un capteur de niveau présent dans le réservoir SCR 8 afin de vérifier si le niveau prédéterminé jugé critique correspondant à la quantité prédéterminée minimale précédemment mentionnée est atteint. En alternative, la quantité restante dans le réservoir SCR 8 peut être estimée, par exemple, en fonction du kilométrage parcouru depuis le dernier remplissage du réservoir 8 SCR. Il peut aussi être tenu compte d'autres paramètres de conduite du véhicule, par exemple le roulage en mode électrique pour un véhicule hybride pour une estimation plus fine de la quantité d'agent SCR restante dans le réservoir SCR 8.

La quantité d'agent SCR minimale jugée critique dans le réservoir SCR 8 peut être prédéterminée pour permettre encore au véhicule de rouler un certain nombre de kilomètres avant que le réservoir SCR 8 ne soit complément vide. Dans le cas où il n'y a pas de piège à NOx pour assurer un mode de dépollution LNT, le véhicule devra être alors immobilisé pour insuffisance de dépollution effectuée par le système SCR. Conformément à la présente invention qui prévoit un mode LNT de remplacement, le véhicule peut cependant continuer à rouler en assurant une dépollution satisfaisante des oxydes d'azote même si le système SCR est inopérant par manque d'agent SCR.

L'envoi d'au moins une alerte urgente peut être fait dans diverses situations, par exemple sans être limitatif quand le véhicule roule ou est en arrêt, quand le moteur thermique fonctionne ou non, etc. De même, l'alerte urgente peut être répétée, par exemple dès que le véhicule s'arrête et/ou redémarre.

Quand le système de dépollution fonctionne avec le piège à NOx 2, c'est-à-dire en mode LNT, des pics de richesse en carburant dans la ligne L d'échappement se produisent consécutivement, par exemple entre 1 et 20 secondes du fait d'une richesse supérieure à 1, c'est-à-dire d'un excès de carburant en comparaison à la quantité de carburant mélangée à l'air selon les proportions stoechiométriques correspondant à une consommation optimale de carburant avec une richesse égale à 1.

A l'inverse, quand le moteur fonctionne avec le système de dépollution en oxydes d'azote dans sa ligne L d'échappement en mode SCR, la richesse dans le mélange est voisine de 1 en pouvant lui être légèrement inférieure. En effet, pour un bon fonctionnement du moteur, il est nécessaire d'avoir un rapport carburant/air bien établi, par exemple pour le carburant étant de l'essence ce qui n'est pas limitatif mais seulement illustratif, avec un rapport de masse égal à 14,7 fois plus de masse d'air que de masse d'essence. Avec un tel rapport, il est défini une richesse égale à 1. Quand il y a plus d'air par rapport au carburant, la richesse diminue et le mélange carburant/air est dit pauvre, d'où moins de carburant consommé. Inversement, quand il y a plus de carburant par rapport à l'air, la richesse augmente et le mélange est dit riche, d'où plus de carburant consommé.

Le procédé selon la présente invention comporte une étape d'envoi au conducteur d'une alerte d'urgence signifiant que le réservoir SCR 8 est vide ou presque vide et qu'en conséquence la consommation de carburant va augmenter. Ceci se produit du fait de l'ajustement des stratégies de respect des normes d'émissions d'agents polluants sortant d'une ligne L d'échappement d'un véhicule automobile. Cet ajustement des stratégies conduit à assurer la dépollution en oxydes d'azote par le piège à NOx, ce qui implique une augmentation de la consommation de carburant, en particulier lors de la réduction des oxydes d'azote.

En plus de l'alerte qu'une permutation du mode SCR en mode LNT est en cours, en cas de réservoir SCR 8 vide ou en cas d'une quantité restante dans le réservoir SCR 8 descendant en dessous de la quantité prédéterminée minimale jugée critique, l'alerte urgente émise par l'unité de contrôle 6 peut de plus indiquer au conducteur que le mode LNT implique une augmentation de la consommation en carburant par rapport au mode SCR. L'alerte peut aussi avantageusement indiquer que si le conducteur veut revenir à une consommation de carburant optimale, il doit remplir le réservoir SCR afin de revenir à un mode de dépollution SCR pour les oxydes d'azote.

La finalité de la présente invention est d'éduquer le conducteur à une conduite plus respectueuse du niveau de consommation de carburant en utilisant un mode SCR afin de rouler avec une consommation de carburant optimale quand le réservoir SCR 8 est suffisamment rempli tout en lui laissant le choix soit de continuer à rouler en mode LNT ou soit de remplir le réservoir SCR 8 et de pouvoir reprendre le mode SCR plus économique en carburant.

Quand la quantité restante d'agent SCR dans le réservoir 8 chute en dessous de la quantité prédéterminée minimale jugée critique, le contrôle en dépollution NOX exercé par l'unité de contrôle 6 fait passer la ligne d'échappement d'un mode SCR à un mode LNT par piégeage de NOx. Une fois que le conducteur a été informé par ladite au moins une alerte urgente d'un réservoir SCR 8 vide ou d'une quantité restante dans ce réservoir 8 dangereusement faible pour assurer une dépollution efficace en oxydes d'azote pour les kilomètres à venir, si le conducteur ne fait rien, le système de dépollution bascule en mode LNT tout en avertissant avantageusement le conducteur de l'impact économique dû à une augmentation de la consommation de carburant en mode LNT. Cet avertissement accompagnant l'alerte est très persuasif pour convaincre le conducteur de remplir à nouveau le réservoir SCR 8 le plus tôt possible afin d'éviter des dépenses de carburant supplémentaires dues au mode LNT.

L'alerte urgente a donc un caractère éducatif pour le conducteur et un impact sur la dépense en carburant de même que sur un plan environnemental, par exemple en ce qui concerne les émissions de CO2. Cette alerte urgente aide le conducteur à conserver pour son véhicule un profil favorable à l'environnement en ayant un réservoir SCR 8 rempli pour la ligne L d'échappement du véhicule.

Comme précédemment mentionné, l'envoi d'une telle alerte urgente au conducteur peut avantageusement l'informer que la consommation en carburant est modifiée par le changement de mode de dépollution SCR en mode LTN, alors que cette information ne lui était pas disponible selon l'état de la technique.

L'alerte urgente peut prendre différentes formes qui peuvent aussi être combinées les unes avec les autres, par exemple une forme visuelle, avec émission d'une icône ou d'une image sur le tableau de bord du véhicule, cette forme visuelle pouvant être aussi un message écrit, une forme audio avec émission d'un message à destination du conducteur, un message envoyé par téléphone ou tout autre moyen de communication.

Avantageusement, il peut être émis plusieurs alertes pouvant présenter plusieurs niveaux d'urgence communiqués au conducteur pour l'évaluation par le conducteur du risque qu'il encourt à ne pas remplir rapidement le réservoir SCR 8. Ces différentes alertes peuvent présenter les formes mentionnées précédemment pour l'alerte urgente.

Par exemple, il peut y avoir quatre ou cinq niveaux d'urgence de message avec :
- un premier niveau d'urgence nulle avec, dans le cas d'un message écrit, l'émission du message suivant : « Bonne autonomie du réservoir SCR et pas de danger de consommation excessive de carburant » ou simplement « Pas de problème de pollution », la quantité restante dans le réservoir SCR 8 étant alors au-dessus de la quantité minimale,
- un deuxième niveau d'urgence faible avec l'émission du message suivant : « Le réservoir SCR doit être rempli afin d'éviter une consommation excessive de carburant » ou simplement « Remplir le réservoir SCR », la quantité restante dans le réservoir SCR 8 descendant alors vers la quantité minimale, ce deuxième niveau d'urgence pouvant aussi être supprimé pour ne conserver que quatre niveaux d'urgence,
- un troisième niveau d'urgence moyenne avec l'émission du message suivant : « Le niveau du réservoir SCR est critique et le réservoir doit être rempli afin d'éviter une consommation excessive de carburant » ou simplement « Important : remplir le réservoir SCR pour éviter une consommation excessive de carburant», la quantité restante dans le réservoir SCR 8 étant alors en dessous de la quantité minimale,
- un quatrième niveau d'urgence forte avec l'émission du message suivant : « Le réservoir SCR est vide et la consommation de carburant est excessive » ou simplement « Important : remplir le réservoir SCR vide pour revenir à une consommation normale de carburant», le réservoir SCR 8 étant alors vide,
- un cinquième niveau d'urgence redevenue nulle avec l'émission du message suivant : « Le réservoir SCR est rempli et la consommation de carburant est à nouveau normale », le réservoir SCR ayant été à nouveau rempli.

En alternative, un simple message peut être transmis au conducteur pour deux situations différentes, l'une pour une consommation normale de carburant indiquant un mode de conduite économique et un système de dépollution en ordre et l'autre pour une consommation excessive de carburant indiquant un mode de conduite non économique et un système de dépollution en action avec cependant un système SCR 7, 8, 9 ne fonctionnant pas. Ce dernier signal indique au conducteur qu'il n'est plus en mode SCR économique mais qu'il peut continuer à rouler, étant donné que la dépollution en oxydes d'azote est assurée par le piège à NOx, dans un mode LNT en remplacement du mode SCR, à un niveau suffisant pour répondre aux normes de dépollution en vigueur mais cependant moins économique vis-à-vis de la consommation de carburant.

Dans le cas d'une icône ou d'une image, la couleur des icônes peut varier selon l'urgence de l'alerte émise, de manière usuelle en passant du vert (mode économique et système de dépollution en ordre) à l'orange (mode non économique et système de dépollution en ordre) puis au rouge (problème au système de dépollution) quand le niveau d'alerte augmente. Aux alertes d'urgence forte, il peut être adjoint un message indiquant qu'une visite de contrôle est nécessaire, ceci essentiellement pour le remplissage du réservoir SCR 8.

En plus de la couleur, dans le cas d'une alerte visuelle, Il peut aussi être fait utilisation d'autres paramètres pour tous les types d'alerte, par exemple la fréquence de l'alerte, sa durée ou permanence d'affichage ou d'émission.

La permutation du mode SCR en mode LNT est gérée par l'unité de contrôle 6 du système de dépollution avantageusement intégrée dans le contrôle moteur ou dans le BSI du véhicule automobile. Cette unité de contrôle 6 est connectée à l'habitacle du véhicule et présente des moyens de détermination de la quantité d'agent SCR dans le réservoir SCR 8 et des moyens d'émission d'au moins une alerte urgente au conducteur.

Cette unité de contrôle 6 peut aussi être reliée à un ou différents capteurs, par exemple un capteur de niveau dans le réservoir SCR 8, des sondes 4, 5 à oxydes d'azote présentes sur la ligne L d'échappement. De plus, cette unité de contrôle 6 peut aussi être opérationnelle pour d'autres formes de dépollution, par exemple la dépollution en hydrocarbures et/ou en monoxyde de carbone ou la dépollution en particules, notamment des particules de suie.

Les avantages de la présente invention sont nombreux. On pourra citer comme principal avantage que le mode LNT peut être utilisé comme un système de sauvegarde du traitement de dépollution en oxydes d'azote sans aucun risque pour le conducteur d'avoir son véhicule bloqué ou dégradé à cause d'un problème de dépollution défaillante, ce qui est le cas quand le réservoir SCR est vide et qu'il n'est pas prévu de piège à NOx pour compenser l'arrêt de la dépollution SCR par manque d'agent SCR.

Le prix de cette continuation de la possibilité de roulage du véhicule est une légère augmentation de la consommation du carburant du fait d'un fonctionnement de la dépollution avec un piège à NOx en mode LNT, la consommation en carburant redevenant normale dès que le réservoir SCR est de nouveau rempli et dès que la dépollution des oxydes d'azote revient en mode SCR au lieu du mode LNT.

L'avantage de la présente invention lors de la permutation en modes LNT et SCR est l'alerte du conducteur, cette alerte permettant de l'informer implicitement ou explicitement sur les consommations de carburant respectives pour chacun de ces différents modes, ce qui l'incitera à faire effectuer le remplissage du réservoir SCR.

Ceci donne au conducteur le sentiment qu'il est bien informé au sujet des avantages et désavantages des modes de dépollution, ce qui lui procure un sentiment de confiance quant aux stratégies suivies pour la dépollution. De ce fait, il peut, par exemple, être incité à choisir un véhicule à dépollution SCR et à piège à NOx combinés.

Une fois que le conducteur a été alerté sur le niveau critique d'agent SCR, le conducteur a le choix entre ne rien faire avec son véhicule passant en mode LNT et faire effectuer le remplissage du réservoir SCR. Une telle alerte donne donc une liberté de choix que le conducteur n'avait pas auparavant. Comme cette alerte lui indique avantageusement que le mode LNT entraîne une augmentation de la consommation en carburant, le conducteur reçoit un argument très persuasif pour faire effectuer le remplissage du réservoir SCR le plus vite possible pour maintenir un niveau normal de consommation de carburant.

Un tel procédé de permutation d'un mode SCR à un mode LNT avec émission d'une alerte en direction du conducteur a aussi une fonction éducative pour le conducteur et en ce qui concerne le coût du mode LNT en consommation de carburant, ce qui a aussi des conséquences économiques avec un niveau plus élevé d'émission de CO2. Ceci aide le conducteur à maintenir son véhicule automobile dans un mode de fonctionnement de dépollution en oxydes d'azote le plus favorable possible à l'environnement, c'est-à-dire avec un réservoir SCR rempli ou à un niveau permettant le fonctionnement normal du système SCR. Cette possibilité n'était offerte par aucun procédé de contrôle de la dépollution selon l'état de la technique.

## Revendications

1. Procédé de contrôle de la dépollution en oxydes d'azote dans une ligne (L) d'échappement d'un véhicule automobile, dans lequel il est prévu une possibilité de permutation d'un mode SCR avec injection d'un agent SCR à partir d'un réservoir SCR (8) de dépollution en un mode LNT utilisant un piège à oxydes d'azote ou piège NOx quand le réservoir SCR (8) est vide ou contient une quantité d'agent SCR prédéterminée minimale jugée critique pour assurer la dépollution, un retour au mode SCR étant prévu dès que le réservoir SCR (8) a été de nouveau rempli, **caractérisé en ce qu'**au moins une alerte urgente est envoyée au conducteur quand le réservoir SCR (8) est vide ou ne contient plus que ladite quantité minimale pour lui permettre de choisir s'il veut rouler en utilisant le mode LNT ou effectuer un remplissage du réservoir SCR (8).

2. Procédé de contrôle selon la revendication 1, dans lequel il est envoyé au moins une autre alerte d'un différent niveau d'urgence que ladite au moins une alerte urgente.

3. Procédé de contrôle selon la revendication 2, dans lequel il est prévu au moins quatre niveaux d'urgence, comprenant une urgence nulle quand la quantité restante dans le réservoir SCR (8) est au-dessus de la quantité minimale, une urgence moyenne quand la quantité restante dans le réservoir SCR (8) baisse vers la quantité minimale, une urgence forte quand le réservoir SCR (8) est vide ou que la quantité restante est en dessous de la quantité minimale et une urgence redevenue nulle quand le réservoir SCR (8) a été de nouveau rempli.

4. Procédé de contrôle selon l'une quelconque des revendications précédentes, dans lequel ladite au moins une alerte urgente et, le cas échéant, ladite au moins une autre alerte incorporent une indication au conducteur que le mode LNT implique une augmentation de la consommation en carburant par rapport au mode SCR.

5. Procédé de contrôle selon l'une quelconque des revendications précédentes, dans lequel ladite au moins une alerte urgente et, le cas échéant, ladite au moins une autre alerte sont constituées d'un signal sonore, d'un signal visuel ou des deux simultanés, l'alerte ou les alertes pouvant être répétées.

6. Procédé de contrôle selon l'une quelconque des revendications précédentes, dans lequel la quantité d'agent SCR dans le réservoir SCR (8) est mesurée directement ou estimée.

7. Ligne (L) d'échappement d'un véhicule automobile, s'étendant d'un collecteur d'échappement (1a) du moteur thermique (1) en présentant un système de dépollution en oxydes d'azote configuré pour mettre en oeuvre le procédé selon l'une quelconque des revendications précédentes, ce système de dépollution comportant un système SCR (7, 8, 9) présentant un catalyseur SCR (7) et un réservoir SCR (8) injectant par un injecteur (9) un agent SCR dans la ligne (L) d'échappement, le système de dépollution comprenant aussi un piège à oxydes d'azote ou piège à NOx et une unité de contrôle (6) de la dépollution en oxydes d'azote, **caractérisée en ce que** l'unité de contrôle (6) est connectée à l'habitacle du véhicule et présente des moyens de détermination de la quantité d'agent SCR dans le réservoir (8) et des moyens d'émission d'au moins une alerte urgente au conducteur.

8. Ligne (L) d'échappement selon la revendication 7, laquelle comporte un catalyseur d'oxydation (2a) intégrant un piège à NOx en son intérieur.

9. Ligne (L) d'échappement selon la revendication 8, pour laquelle le catalyseur d'oxydation (2a) présente une phase active d'échange avec les gaz d'échappement circulant à travers la ligne (L), cette phase active étant imprégnée par des dépôts d'au moins un élément chimique formant le piège à NOx réagissant avec les oxydes d'azote en donnant un composé chimiquement stable sauf pour des conditions de richesse supérieure à 1 en carburant dans la ligne (L) d'échappement, les oxydes d'azote étant alors libérés et réduits par un réducteur pour former de l'azote.

10. Ligne (L) selon l'une quelconque des revendications 7 à 9, dans laquelle il est prévu au moins une sonde (5, 9) à oxydes d'azote, les valeurs relevées par ladite au moins une sonde (5, 9) étant envoyées à l'unité de contrôle (6) de la dépollution en oxydes d'azote.

## Patentansprüche

1. Verfahren zur Überwachung der Stickoxiddekontamination in einem Auspuffstrang (L) eines Kraftfahrzeugs, wobei eine Möglichkeit des Wechselns von einem SCR-Modus mit Einspritzung eines SCR-Mittels ausgehend von einem SCR-Dekontaminationsbehälter (8) auf einen LNT-Modus vorgesehen ist, der eine Stickoxidfalle oder eine NOx-Falle verwendet, wenn der SCR-Behälter (8) leer ist oder eine Menge an vorbestimmtem SCR-Mittel enthält, die als kritisch angesehen wird, um die Dekontamination sicherzustellen, wobei eine Rückkehr zu dem SCR-Modus vorgesehen ist, sobald der SCR-Behälter (8) erneut gefüllt wurde, **dadurch gekennzeichnet, dass** mindestens eine dringende Warnung an den Fahrer gesendet wird, wenn der SCR-Behälter (8) leer ist oder nur noch die Mindestmenge enthält, um es ihm zu erlauben, auszuwählen, ob er unter Verwenden des LNT-Modus fahren oder ein Füllen des SCR-Behälters (8) ausführen will.

2. Steuerverfahren nach Anspruch 1, wobei mindestens eine andere Warnung eines unterschiedlichen Dringlichkeitsniveaus als das der mindestens einen dringenden Warnung gesendet wird.

3. Steuerverfahren nach Anspruch 2, wobei mindestens vier Dringlichkeitsniveaus vorgesehen sind, die eine Null-Dringlichkeit umfassen, wenn die Menge, die in dem SCR-Behälter (8) verbleibt, oberhalb der Mindestmenge liegt, eine mittlere Dringlichkeit, wenn die Menge, die in dem SCR-Behälter (8) verbleibt, zu der Mindestmenge absinkt, eine hohe Dringlichkeit, wenn der SCR-Behälter (8) leer ist, oder wenn die restliche Menge unterhalb der Mindestmenge liegt, und eine Dringlichkeit, die wieder null geworden ist, wenn der SCR-Behälter (8) erneut gefüllt wurde.

4. Steuerverfahren nach einem der vorhergehenden Ansprüche, wobei die mindestens eine dringliche Warnung und, gegebenenfalls, die mindestens eine andere Warnung eine Angabe für den Fahrer enthalten, dass der LNT-Modus eine Erhöhung des Kraftstoffverbrauchs im Vergleich zum SCR-Modus bedingt.

5. Steuerverfahren nach einem der vorhergehenden Ansprüche, wobei die mindestens eine dringliche Warnung und, gegebenenfalls, die mindestens eine andere Warnung aus einem akustischen Signal, einem visuellen Signal oder aus den beiden gleichzeitig bestehen, wobei die Warnung oder die Warnungen wiederholt werden können.

6. Steuerverfahren nach einem der vorhergehenden Ansprüche, wobei die SCR-Mittelmenge in dem SCR-Behälter (8) direkt gemessen oder geschätzt wird.

7. Abgasstrang (L) eines Kraftfahrzeugs, der sich von einem Abgaskrümmer (1a) der Brennkraftmaschine (1) erstreckt, der ein Stickoxiddekontaminationssystem aufweist, das konfiguriert ist, um das Verfahren nach einem der vorhergehenden Ansprüche umzusetzen, wobei dieses Dekontaminationsverfahren ein SCR-System (7, 8, 9) umfasst, das einen SCR-Katalysator (7) und einen SCR-Behälter (8), der über eine Einspritzdüse (9) ein SCR-Mittel in den Abgasstrang (L) einspritzt, aufweist, wobei das Dekontaminationssystem auch eine Stickoxidfalle oder einen NOx-Falle und eine Steuereinheit (6) der Stickoxiddekontamination umfasst, **dadurch gekennzeichnet, dass** die Steuereinheit (6) an den Innenraum des Fahrzeugs angeschlossen ist und Mittel zum Bestimmen der SCR-Mittelmenge in dem Behälter (8) und Mittel zum Senden mindestens einer dringenden Warnung an den Fahrer aufweist.

8. Abgasstrang (L) nach Anspruch 7, der einen Oxidationskatalysator (2a), der eine NOx-Falle in seinem Inneren integriert, umfasst.

9. Abgasstrang (L) nach Anspruch 8, für den der Oxidationskatalysator (2a) eine aktive Austauschphase mit den Abgasen aufweist, die durch den Abgasstrang (L) zirkulieren, wobei diese aktive Phase von Ablagerungen mindestens eines chemischen Elements imprägniert ist, das die NOx-Falle bildet, die mit den Stickoxiden reagiert, wobei sie außer bei Reichhaltigkeitszuständen über 1 an Kraftstoff in dem Abgasstrang (11) eine chemisch beständige Verbindung ergibt, wobei die Stickoxide freigesetzt und von einem Reduktionsmittel reduziert werden, um Stickstoff zu bilden.

10. Abgasstrang (L) nach einem der Ansprüche 7 bis 9, wobei mindestens eine Stickoxidsonde (5, 9) vorgesehen ist, wobei die von der mindestens einen Sonde (5, 9) erhobenen Werte zu der Steuereinheit (6) der Stickoxiddekontamination gesendet werden.

## Claims

1. A method for monitoring the nitrogen oxide decontamination in an exhaust line (L) of a motor vehicle, in which there is provided a possibility of switching from an SCR mode with injection of an SCR agent from an SCR decontamination tank (8) to an LNT mode using a nitrogen oxide trap or NOx trap when the SCR tank (8) is empty or contains a predetermined minimum quantity of SCR agent judged to be critical for ensuring decontamination, a return to the SCR mode being provided as soon as the SCR tank (8) has been filled again, **characterized in that** at least one urgent warning is sent to the driver when the SCR tank (8) is empty or only contains said minimum quantity, to permit him to choose if he wishes to travel using the LNT mode or to carry out a filling of the SCR tank (8).

2. The monitoring method according to Claim 1, in which at least one other warning is sent of a different level of urgency than said at least one urgent warning.

3. The monitoring method according to Claim 2, in which at least four levels of urgency are provided, including a zero urgency when the quantity remaining in the SCR tank (8) is above the minimum quantity, a medium urgency when the quantity remaining in the SCR tank (8) is reducing toward the minimum quantity, a high urgency when the SCR tank (8) is empty or when the quantity remaining is below the minimum quantity, and an urgency returned to zero when the SCR tank (8) has been filled again.

4. The monitoring method according to any one of the preceding claims, in which said at least one urgent warning is, if applicable, said at least one other warning incorporating an indication to the driver that the LNT mode involves an increase in the consumption of fuel compared to the SCR mode.

5. The monitoring method according to any one of the preceding claims, in which said at least one urgent warning and, if applicable, said at least one other warning are constituted by an acoustic signal, a visual signal or both simultaneously, the warning or warnings being able to be repeated.

6. The monitoring method according to any one of the preceding claims, in which the quantity of SCR agent in the SCR tank (8) is measured directly or is estimated.

7. An exhaust line (L) of a motor vehicle, extending from an exhaust manifold (1a) of the heat engine (1), having a nitrogen oxide decontamination system configured to implement the method according to any one of the preceding claims, this decontamination system comprising an SCR system (7, 8, 9) having an SCR catalytic converter (7) and an SCR tank (8) injecting by an injector (9) an SCR agent in the exhaust line (L), the decontamination system also including a nitrogen oxide trap or NOx trap and a monitoring unit (6) of the nitrogen oxide decontamination, **characterized in that** the monitoring unit (6) is connected to the passenger compartment of the vehicle and has means for determining the quantity of SCR agent in the tank (8) and means for emitting at least one urgent warning to the driver.

8. The exhaust line (L) according to Claim 7, which comprises an oxidation-type catalytic converter (2a) integrating a NOx trap in its interior.

9. The exhaust line (L) according to Claim 8, for which the oxidation-type catalytic converter (2a) has an active phase of exchange with the exhaust gases circulating through the line (L), this active phase being impregnated by deposits of at least one chemical element forming the NOx trap reacting with the nitrogen oxide, giving a chemically stable compound except for conditions of richness greater than 1 of fuel in the exhaust line (L), the nitrogen oxide being then freed and reduced by a reducer to form nitrogen.

10. The line (L) according to any one of Claims 7 to 9, in which there is provided at least one nitrogen oxygen probe (5, 9), the values recorded by said at least one probe (5, 9) being sent to the nitrogen oxide decontamination monitoring unit (6).
